# EUROPÄISCHE PATENTSCHRIFT

(11) **EP 0 968 645 B1**
(45) Veröffentlichungstag und Bekanntmachung des Hinweises auf die Patenterteilung: **30.07.2003**
(21) Anmeldenummer: 99104847.1
(22) Anmeldetag: 11.03.1999
(51) Int. Cl.: A01G 3/053

(54) **Heckenschere**
Hedge trimmer
Taille-haie

(30) Priorität: 30.06.1998 DE 19829132
(43) Veröffentlichungstag der Anmeldung: 05.01.2000
(73) Patentinhaber: SCINTILLA AG, CH-4501 Solothurn (CH)
(72) Erfinder: Lederhilger, Herbert, A-4040 Linz (AT); Di Nicolantonio, Aldo, CH-4565 Recherswil (CH)
(74) Vertreter: Wierspecker, Horst

(56) Entgegenhaltungen:
- EP-A- 0 700 632
- DE-A- 4 224 665
- GB-A- 1 236 158

## Beschreibung

### Stand der Technik

Die Erfindung geht aus von einer Heckenschere nach dem Oberbegriff des Anspruchs 1.

Durch die Gebrauchsmusterschrift DE 296 22 920 U1 ist eine Heckenschere bekannt, deren Schneidsatz aus zwischen Führungsschienen geführten Messern besteht, wobei die Messer gegenüber ihrer Führungsschiene durch erhabene, geprägte Bereiche dieser Führungsschiene parallel zur Messerebene geführt werden. Die geprägten Bereiche durchgreifen dabei Langlöcher der Messer. Die Führung bzw. Distanzhaltung der Messer quer zur Messerebene wird durch gesonderte Schrauben bzw. deren Schraubenköpfe übernommen, die in die erhaben geprägten Bereiche der Führungsschiene einschraubbar sind. Diese bekannte Heckenschere, insbesondere deren Schneidsatz, besteht aus vielen Einzelteilen und ist aufwendig herzustellen.

Durch die Patentschrift DE 44 00 013 C2 ist eine Schneidvorrichtung beispielsweise für Haarschneidemaschinen bekannt, deren Schneidplatte und Schneidmesser mittels einer Halteeinrichtung geführt werden, die aus zwei durch eine Renkverbindung miteinander verbundenen Halteteilen besteht. Außerdem sind die Schneidplatte und das Schneidmesser mittels Führungsstiften lösbar gegen Verlieren gesichert bzw. gegen Verschieben quer zur Längsachse in der Messerebene - um den Betrag eines Arbeitshubes längsverschiebbar - miteinander verbunden. Die bekannte Schneidvorrichtung besteht aus vielen Einzelteilen und erfordert eine aufwendige Montage.

### Vorteile der Erfindung

Die Heckenschere mit den kennzeichnenden Merkmalen des Anspruchs 1 hat den Vorteil, daß deren aus mindestens einem Heckenscherenmesser mit mindestens einer Führungsschiene oder aus einem Heckenscherenmesserpaar ohne Führungschiene bzw. mit mindestens einer Führungsschiene, insbesondere zwei Führungsschienen, bestehenden Schneidsatz ohne weitere Befestigungsmittel, d.h. unter Einsparung von Einzelteilen, besonders leicht, einfach, schnell und sicher ohne Hilfswerkzeug montierbar ist.

Dadurch, daß die Heckenschere nur eine einzige u-profilförmige Führungsschiene aufweist, ist sie bei geringem Gewicht besonders stabil und einfacher montierbar.

Dadurch, daß die Renkverbindung einerseits durch eine aus der Ebene herausragende Ausprägung der Führungsschiene, insbesondere lappenartig, mit einem gegenüber dem Fußbereich breiteren, vorzugsweise pilzkopfartigen, freien Ende und andererseits durch eine, insbesondere schlüssellochartige, Ausnehmung des Heckenscherenmessers gebildet wird, wobei die Ausnehmung einen weiten Bereich zum Durchtritt des freien Endes und einen engen Bereich zum unverlierbaren Umgreifen des Fußbereichs der Ausprägung aufweist, wobei der enge Bereich länger ist als der Arbeitshub des Heckenscherenmessers, ist eine robuste, einfach herstellbare Renkverbindung zur Führung der Heckenscherenmesser geschaffen.

Dadurch, daß der enge Bereich der Ausnehmung schmaler als das freie Ende und breiter als der Fußbereich der Ausprägung ist, sind die Heckenscherenmesser unverlierbar gegenüber der Führungsschiene gesichert.

Dadurch, daß zwischen den zwei Führungsschienen ausschließlich Renkverbindungen angeordent sind, die eine Ausnehmung des mindestens einen Heckenscherenmessers durchtreten, ist eine einfache und robuste sowie leichte und leicht montierbare Anordnung der Heckenscherenmesser sowie Führungsschienen geschaffen.

Dadurch, daß außer der Renkverbindung keine weiteren Befestigungsmittel wie Nieten, Schrauben zwischen dem mindestens einen Heckenscherenmesser und der mindestens einen Führungsschiene angeordnet sind, ist mit wenigen Einzelteilen und geringem Montageaufwand die Heckenschere herstellbar.

Dadurch, daß die Ausnehmung des Heckenscherenmessers als Langloch, insbesondere schlüssellochartig mit einem weiten und einem engen Bereich, ausgestaltet ist, können sie sowohl mit nur einer einzigen Führungsschiene als auch mit zwei Führungsschienen zu je einem Heckenscheren-Schneidsatz kombiniert werden.

Dadurch, daß die Renkverbindung einerseits durch eine aus der Ebene einer der Führungsschienen herausragende Ausprägung insbesondere lappenartig, mit einem gegenüber dem übrigen Bereich breiteren, pilzkopfartigen freien Ende, und andererseits durch eine, insbesondere schlüssellochartige, Ausnehmung der anderen Führungsschiene gebildet wird, wobei die Ausnehmung einen weiten Bereich zum Durchtritt des freien Endes der Ausprägung und einen engen Bereich zum unverlierbaren Umgreifen des übrigen Bereichs der Ausprägung aufweist, sind die beiden Führungschienen besonders sicher - durch axiales Verschieben nach Einklinken der Renkverbindungg - miteinander verbindbar.

Dadurch, daß das freie Ende der Ausprägung ein ebenes, insbesondere rechtwinklig zur Führungsschiene ausgerichtetes, Kreuz bildet, das mit i.w. längsparallel zur Führungsschiene verlaufenden und winklig aus der Führungsschiene heraustretenden Lappen verbunden ist, ist ein besonders einfach herstellbare, robuste Renkverbindung geschaffen.

Dadurch, daß mehrere Renkverbindungen im Abstand von etwa 100 mm aufeinander folgen, sind die Heckenscherenmesser auf ihre gesamte Länge besonders sicher einander zugewandt lagegesichert.

Dadurch, daß das freie Ende der Ausprägung ein quer zur Führungsschiene aus deren Flachseite herausragender T-profilförmiger Lappen ist, ist eine besonders einfach realisierbare Grundform der Renkverbindung geschaffen, die z.B. dadurch variierbar ist, daß der T-Querbalken abgerundet ist, z.B. kreisrund.

Dadurch, daß die Ausprägung in Gestalt zweier quer zur Führungsschiene verlaufender, mit ihrem Schenkel nach außen weisender L-profilförmiger Lappen ist, ist eine weitere, einfach realisierbare Variante für Heckenscheren besonders geeigneter, robuster Renkverbindungen geschaffen.

Dadurch, daß der enge Bereich der Ausnehmung schmaler als der Kopfbereich und breiter als der Fußbereich der Ausprägung ist, kann deren Kopfbereich die Ausnehmung so durchgreifen, daß die Messer gegenüber den Führungsschienen bei ihrem Arbeitshub - ohne weitere Halteelemente wie Schrauben oder dergl. - unverlierbar im vorgesehenen parallelen Abstand relativ zueinander verschiebbar sind.

### Zeichnung

Nachfolgend ist die Erfindung durch Ausführungsbeispiele mit zugehöriger Zeichnung erläutert.

Es zeigen
Figur 1 eine seitliche Schnittdarstellung einer erfindungsgemäßen Heckenschere,
Figur 2 eine Seitenansicht des Schneidsatzes mit zwei Führungsschienen und zwei Messern,
Figur 3 die Seitenansicht der unteren Führungsschiene gemäß Figur 2,
Figur 4 eine vergrößerte Schnittansicht der Führungsschiene im Bereich der Ausprägung gemäß Figur 3,
Figur 5 eine Draufsicht der Führungsschiene gemäß Figur 3,
Figur 6 eine Draufsicht der oberen Führungsschiene nach Figur 2,
Figuren 7, 8 eine räumliche Darstellung der Enden der oberen und unteren Führungsschienen gemäß Figur 4, 6,
Figur 9 eine seitliche Darstellung eines weiteren Beispiels eines Schneidsatzes mit nur einer Führungsschiene mit L-förmiger Renkverbindung,
Figuren 10, 11 eine Seitenansicht und eine Draufsicht der Führungsschiene gemäß Figur 9,
Figur 11 den Querschnitt der Führungsschiene gemäß Figur 9 im Bereich der zwei 1-förmigen Lappen als vergrößerte Einzelheit und in Figur 12 als räumliche Darstellung,
Figur 13 als weiteres Beispiel eine Seitenansicht eines Schneidsatzes mit nur einer Führungsschiene mit T-förmiger Renkverbindung,
Figuren 14, 15 eine Seitenansicht und eine Draufsicht der Führungsschiene gemäß Figur 13,
Figur 16 den Querschnitt der Führungsschiene gemäß Figur 14 im Bereich des kreuzförmigen Lappens als vergrößerte Einzelheit
Figur 17 ein Messer der Heckenschere mit je einer Reihe Schneide- und Haltezähne des Schneidsatzes gemäß Figur 13,
Figur 18 den vorderen Abschnitt einer u-profilförmigen Führungsschiene mit T-förmigem, abgebogenem Lappen,
Figur 19 den vorderen Abschnitt einer u-profilförmigen Führungsschiene mit kreisförmigem, abgebogenem Lappen sowie mit einem benachbarten abgebogenen Lappen,
Figur 20 den vorderen Abschnitt einer Gegen-Führungsschiene,
Figur 21 eine Seitenansicht eines Schneidsatzes mit zwei Führungsschienen mit 1-förmiger Renkverbindung,
Figuren 22, 23 eine Seitenansicht und Draufsicht einer Führungsschiene mit Ausprägungen in U-form mit je einem abgebogenem Schenkel,
Figuren 24, 25 einen Längs- und Querschnitt der Führungsschiene gemäß Figuren 22, 23 im Bereich eines U-förmigen Lappens und
Figur 26 die Draufsicht einer Gegen-Führungsschiene mit quadratischen Ausnehmungen.

### Beschreibung der Ausführungsbeispiele

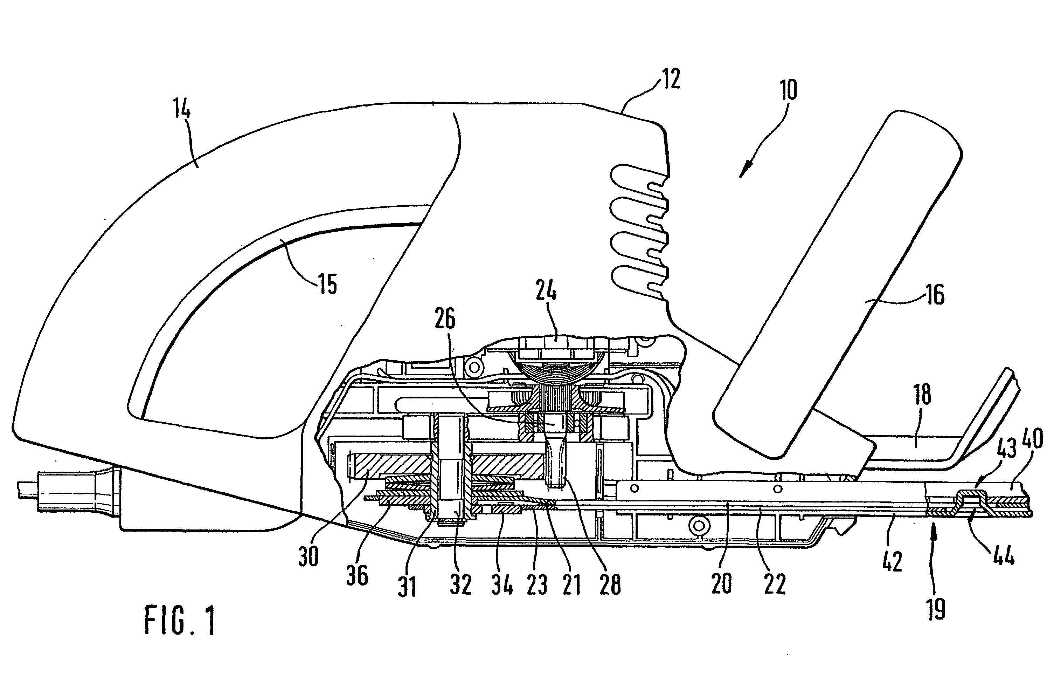

Figur 1 zeigt eine seitliche Schnittdarstellung einer Hekkenschere 10 mit einem Gehäuse 12. Das Gehäuse 12 trägt einen Handgriff 14 mit einer im Griffbereich herausragender Taste 15 eines Ein-Ausschalters zur Antriebsbetätigung, einen Haltegriff 16, ein Schild 18 sowie einen Schneidsatz 19. Der Schneidsatz 19 besteht aus zwei Messern 20, 22 mit je einem Kulissenbereich 21, 23.

Im Inneren des Gehäuses ist ein Elektro-Motor 24 angeordnet, der über eine Motorwelle 26 mit einem Motorritzel 28 ein Messer-Ritzel 30 wirkverbunden ist. Das Messer-Ritzel 30 ist über ein Ritzel-Lager 31 auf einer Ritzel-Achse 32 drehbar gelagert.

Das Messer-Ritzel 30 trägt auf seiner Stirnseite zwei zueinander versetzte Exzenter 34, 36 zum Eingriff in die Kulissenbereiche 21, 23 zur hin- und hergehenden Mitnahme der Messer 20, 22.

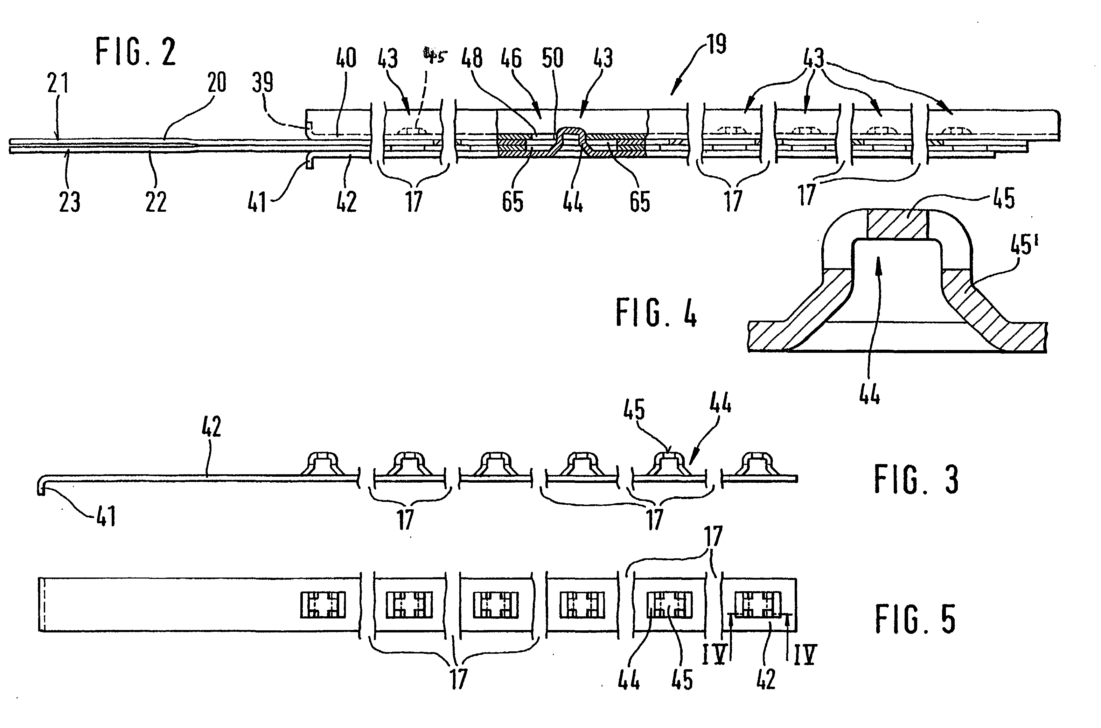

Die Messer 20, 22 sind mit ihren Flachseiten aufeinander abgestützt und gegeneinander verschiebbar angeordnet, wobei sie außen zwischen einer oberen und einer unteren Führungsschiene 40, 42 geführt werden. Zwischen den Führungsschienen 40, 42 besteht eine Renkverbindung 43. Als Teil dieser Renkverbindung 43 trägt die untere Führungsschiene 42 Ausprägungen 44. Diese verlaufen in Längsrichtung u-förmig, wobei ihre konvex gewölbten Bereiche Ausnehmungen 46 (Fig. 2) der oberen Führungsschiene 40 durchtreten.

Figur 2 zeigt in einer Seitenansicht des Schneidsatzes 19 dessen Längserstreckung, die aus zeichnerischen Gründen mit Unterbrechungen 17 dargestellt ist. Darin sind die Führungsschienen 40, 42 und die Messer 20, 22 erkennbar, wobei die Ausgestaltung der Renkverbindung 43 in einer Teil-Längsschnittdarstellung deutlich wird. Die Renkverbindung 43 besteht einerseits aus im seitlichen Verlauf zur oberen Führungsschiene 40 hin gewölbten, u-förmigen Ausprägungen 44 der unteren Führungsschiene 42, die langlochartige Ausnehmungen 46 der oberen Führungsschiene 40 bzw. Langlöcher 65 der Messer 20, 22 durchtritt und mit ihrem breiteren, kreuzförmigen freien Ende 45 die obere Führungsschiene 40 haltend übergreift. Die Führungsschienen 40, 42 sind als Flach- bzw. Winkelblech-Teile mit rechtwinklig quer abgebogenen Enden 39, 41 zur Halterung am Gehäuse 12 ausgestaltet.

Figur 3 zeigt die Seitenansicht der unteren Führungsschiene 42 als Einzelheit mit den nach oben gewölbten Ausprägungen 44 mit dem kreuzförmig ausgestalteten freien Ende 45.

Figur 4 zeigt die vergrößerte Einzelheit der Ausprägung 44 im seitlichen Schnitt nach der Linie IV-IV aus Figur 5 mit dem freien Ende 45 und dessen Fußbereich 45'.

Durch Figur 5 ist in der Draufsicht der unteren Führungsschiene 42 die kreuzförmige Ausgestaltung des freien Endes 45 der Ausprägungen 44 erkennbar.

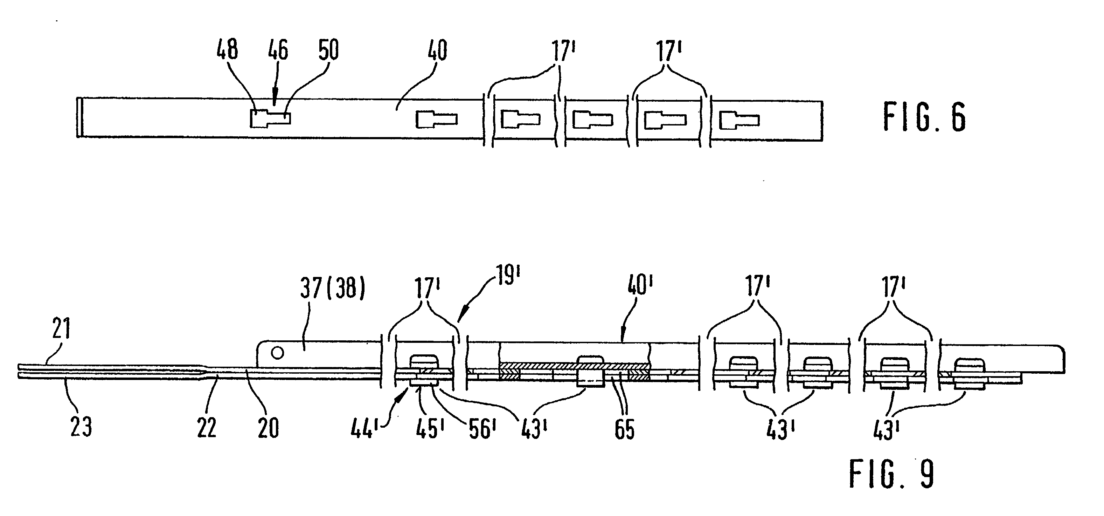

Figur 6 zeigt die Draufsicht der oberen Führungsschiene 40 mit den schlüssellochartigen Ausnehmungen 46, wobei deren jeweils weiten und engen Bereiche 48, 50 zum Durchtritt der Ausprägungen 44 der unteren Führungsschiene 42 erkennbar sind.

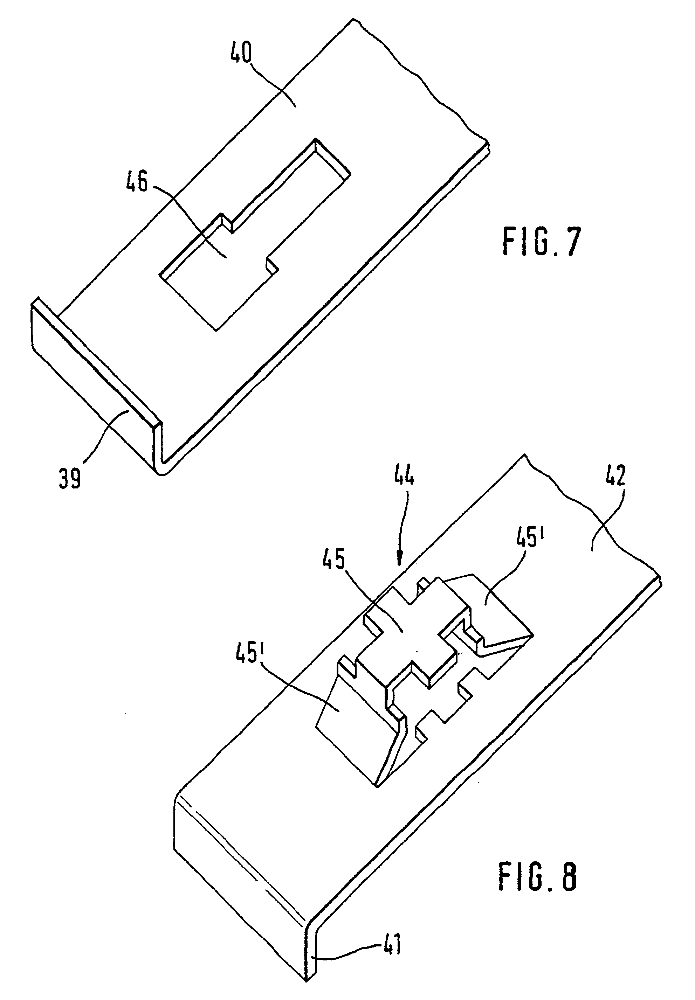

Die Figuren 7, 8 zeigen vergrößert die gebogenen Enden 39, 41 der Führungsschienen 40, 42 mit einer der Ausprägungen 44 bzw. einer der schlüssellochartigen Ausnehmungen 46.

Figur 8 zeigt deutlich, daß der winklig aus der Führungsschiene 42 nach oben verlaufende stegartige Fußbereich 45' breiter ist als der längsparallel zur Führungsschiene 42 verlaufende Bereich des kreuzförmigen freien Endes 45 der Ausprägung 44. Der Fußbereich 45' sitzt bei montiertem Schneidsatz 19 in je einem Langloch 65 der Messer 20, 22 und dient zu deren seitlicher Führung.

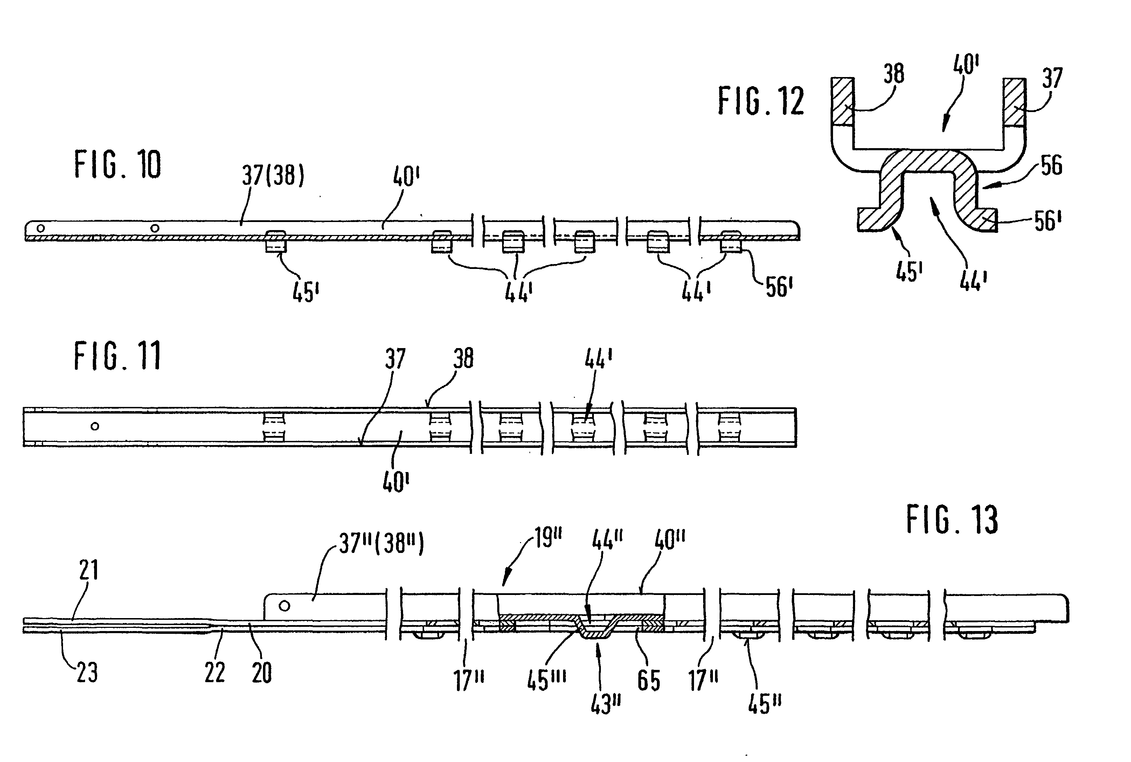

Figur 9 zeigt eine seitliche Darstellung eines weiteren Ausführungsbeispiels eines Schneidsatzes 19' mit nur einer einzigen aus Winkelblech bestehenden Führungsschiene 40', durch Unterbrechungen 17' verkürzt dargestellt. Zwischen den Messern 20, 22 und der aus einem biegesteifen u-Profil mit Profil-Schenkeln 37, 38 bestehenden Führungsschiene 40' ist eine Renkverbindung 43' vorgesehen. Diese besteht aus im Querschnitt (Fig. 12) U-förmigen Ausprägungen 44' der Führungsschiene 40', deren Schenkelenden 56' rechtwinklig nach außen abgebogen sind. Mit ihrem Fußbereich 45' greifen die Ausprägungen 44' durch schlüssellochartige Langlöcher 65 der Messer 20, 22 und führen diese gegen seitliche Verschiebung gesichert bei ihrem hin- und hergehenden Arbeitshub. Zwischen der den Profil-Schenkeln 37, 38 abgewandten Seite der Führungsschiene 40' und dem äußeren Messer 22 stützt sich das innere Messer 20 mit seinen Flachseiten ab. Daran anliegend stützt sich das äußere Messer 22 außen an den Schenkelenden 56' des U-Profils 56 unverlierbar renkverbunden ab.

Die in Figur 10 gezeigte Seitenansicht und die in Figur 11 gezeigte Draufsicht der Führungsschiene 40' verdeutlicht die Ausgestaltung der Ausprägungen 44' als quer angeordnetes , u-Profil 56 mit rechtwinklig nach außen gebogenen Schenkeln.

Figur 12 zeigt eine Vergrößerung des Querschnitts der Führungsschiene 40', wobei ds u-Profil 56 mit rechtwinklig nach außen gebogenen Schenkeln deutlich wird.

Figur 13 zeigt, durch Unterbrechungen 17" verkürzt dargestellt eine seitliche Darstellung eines weiteren Ausführungsbeispiels eines Schneidsatzes 19" mit nur einer einzigen Führungsschiene 40". Zwischen den Messern 20, 22 und der aus einem u-Profil bestehenden Führungsschiene 40" ist eine Renkverbindung 43" vorgesehen. Diese besteht aus im Längsschnitt (Fig. 3, 4) U-förmigen Ausprägungen 44" der Führungsschiene 40" mit einem freien Ende 45" und einem Fußbereich 45"'. Diese sind den Messern 20, 22 mit ihrem nach außen gewölbten Bereich der Ausprägungen 44" zugewandt, mit denen sie die schlüssellochartigen Langlöcher 65 durchgreifen und mit diesen die Renkverbindung 43" bilden. Mit ihrem Fußbereich 45"' stützen sich die Ausprägungen 44" in den Langlöchern 65 der Messer 20, 22 ab und führen diese gegen seitliche Verschiebung gesichert bei ihrem hin- und hergehenden Arbeitshub. Mit ihrem kreuzartig verbreiterten freien Ende 45" stützen sich die Ausprägungen 44" gegen die Außenseite des äußeren Messers 22.

Dabei stützt sich auf der den U-Schenkeln 37", 38" abgewandten Seite der Führungsschiene 40" zwischen dieser und dem äußeren Messer 22 das innere Messer 20 mit seinen Flachselten ab. Daran anliegend stützt sich das äußere Messer 22 außen an den kreuzartigen freien Enden 45'' der Ausprägungen 44" unverlierbar renkverbunden ab.

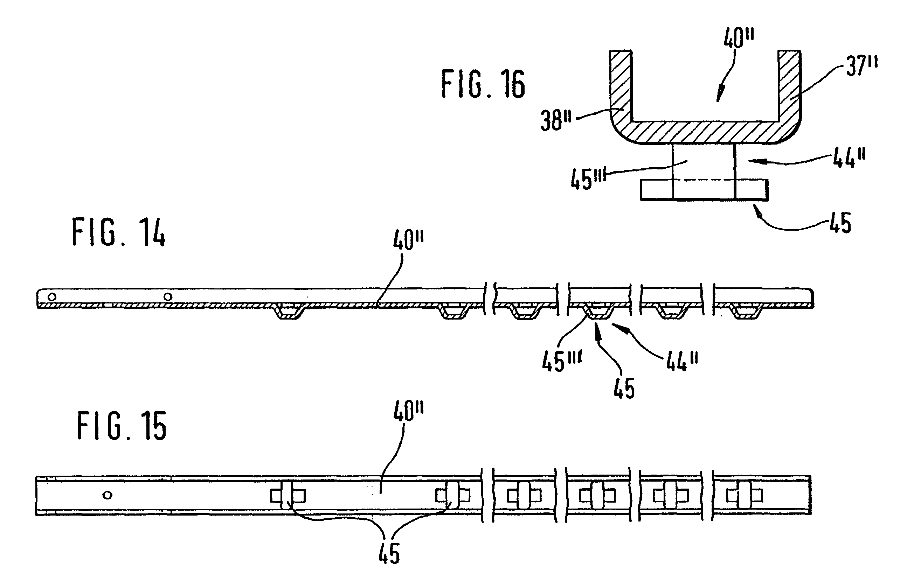

Die Figuren 14, 15 und 16 zeigen die Führungsschiene 40" als Einzelteil in Seitenansicht, Draufsicht und im vergrößerten Querschnitt, wobei die zu Figur 13 genannten Einzelheiten, insbesondere die Ausprägung 44" der Renkverbindung 43" deutlich werden. Hier besteht der Unterschied gegenüber der Führungsschiene 42 gemäß den Figuren 3, 4 und 5 darin, daß der Fußbereich 45 "der Ausprägung 44" genauso breit ist wie der achsparallele Bereich des kreuzartigen freien Endes 45. Dies liegt daran, daß die Ausprägung 44" nur die schlüssellochartigen Langlöcher 65 der Messer 20, 22 zwecks Herstellung der Renkverbindung 43" durchtritt aber keine gegenüberliegenden Führungsschiene mit einer bestimmten Distanz festhalten muß.

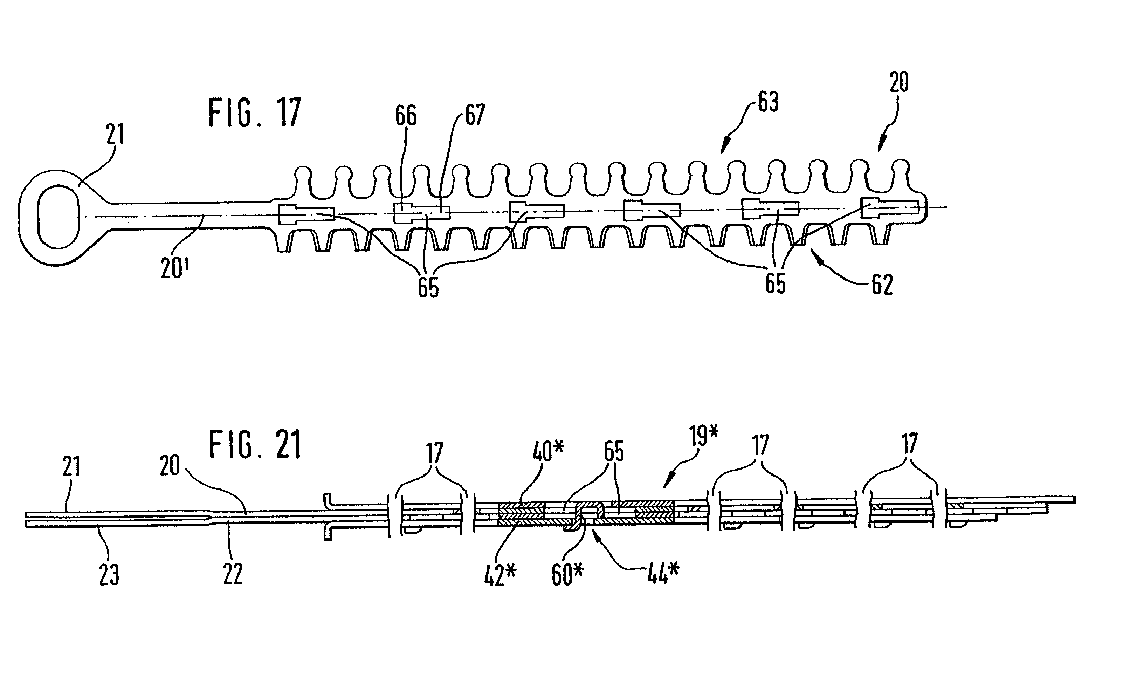

Ein in Figur 17 gezeigtes Messer 20 weist eine obere Haltezahnreihe 63 und eine untere Schneidezahnreihe 62 auf. Außerdem trägt das Messer 20 entlang seiner Mittellängsachse 20' sechs schlüssellochartige Langlöcher 65 mit je einem weiten und einem engen Bereich 66, 67. Damit ist die Renkverbindung 43" zwischen der Führungsschiene 40" und dem Messer 20 montierbar. Das zugehörige zweite Messer 22 ist mit dem Messer 20 identisch und wird mit diesem um seine Längsachse gedreht zu einem Messerpaar montiert. Dadurch stehen der Haltezahnreihe 63 des einen eine Schneidezahnreihe 62 des anderen Messers und umgekehrt zum Zusamennwirken gegenüber.

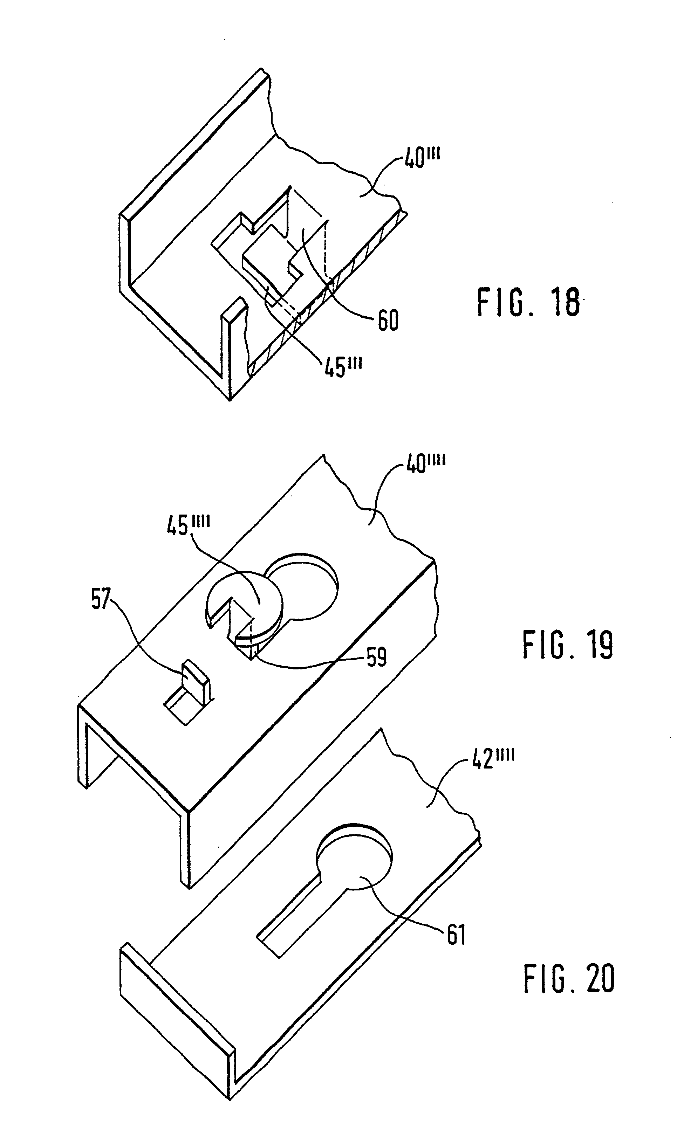

Figur 18 zeigt den vorderen Abschnitt einer u-profilförmigen Führungsschiene 40''' mit einem längs freigestanzten, rechtwinklig nach oben gebogenem lappenartigem Bereich 60 mit parallel zur Führungsschiene 40"' umgebogenem freien Ende 45"', dessen Querschnitt T-förmig und dessen Längsschnitt L-förmig ist und das zum Festhalten einer nichtdargestellten Gegenführungsleiste oder eines nichtdargestellten Messers ohne zweite Führungsleiste - mit schlüssellochartiger Ausnehmung zum Durchtritt der Renkverbindung - dient.

Figur 19 zeigt den vorderen Abschnitt einer U-profilförmigen Führungsschiene 40"" mit längs hochgebogenem kreisförmigem, abgebogenem Lappen 59 mit parallel zur Führungsschiene 40"" umgebogenem freien Ende 45"" mit einem zusätzlichen, axial davon beabstandeten, längs freigestanzten, rechtwinklig nach oben aus der Führungsschiene 40"" gebogenem Lappen 57.

Figur 20 zeigt eine Gegen-Führungsschiene 42"" mit schlüssellochartiger Ausnehmung 61, die mit der Führungsschiene 40"" gemäß Figur 19 renkverbindbar ist, wobei der gerade Lappen 57 zum engen Führen der Messer 20, 22 durch Abstützen in deren Langlöchern während ihres Arbeitshubes und als Distanzhalter der beiden Führungsschienen 40"", 42 "" dient, d.h. die Gegen-Führungsschiene 42"" ist zwischen dem geraden Lappen 57 axial und dem Ende 45"" der Führungsschiene 40"" mit einer bestimmten Distanz fixiert.

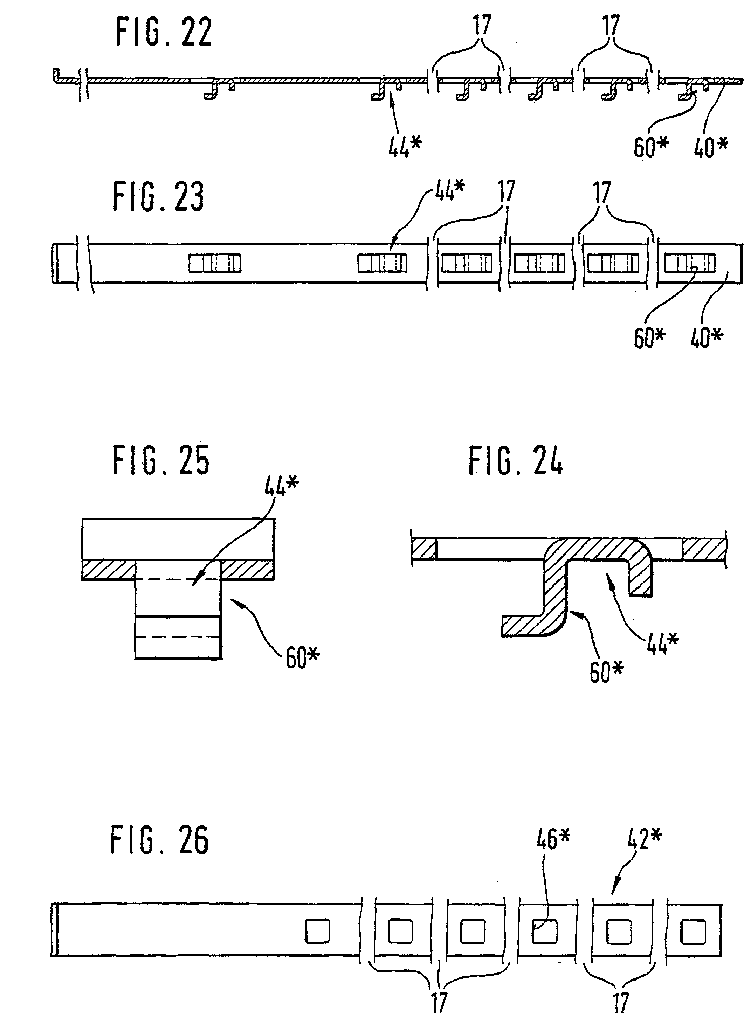

Figur 21 zeigt eine Seitenansicht eines Schneidsatzes 19*, der mit der Heckenschere 10 kombinierbar ist, mit zwischen zwei Führungsschienen 40*, 42* geführten Messern 20, 22 mit einer im Längsschnitt U-förmigen Ausprägung 44* zur Renkverbindung der Führungsschienen 40*, 42* ähnlich der gemäß den Figuren 18 bzw. 19, 20, wobei ein U-Schenkel der Ausprägung 44* mit seinem Ende nach außen flach abgebogen ist zum Übergreifen und Lagesichern der Gegen-Führungsschiene 42*. Dazu haben die Messer 20, 22 mehrere Langlöcher 65, die die Ausprägungen 44* der Gegenführungsschiene 42* hin- und hergehend eng geführt umgreifen.

Figur 22 zeigt - durch Unterbrechungen 17 verkürzt dargestellt - einen Längsschnitt der Führungsschiene 40* und die Ausprägungen 44* mit seitlich abgebogenem Schenkelende des U-Profils 60* und die Figur 23 zeigt die Draufsicht der Führungsschiene 40* mit den zuvor genannten Einzelheiten. Dazu zeigt Figur 24 einen vergrößerten Längsschnitt des U-Profils 60* der Ausprägung 44* mit nach links abgebogenem U-Schenkel-Ende und Figur 25 den vergrößerten Querschnitt der Führungsschiene 40* gemäß Figuren 22, 23 im Bereich der Ausprägung 44* des U-förmigen Lappens 60*.

Figur 26 zeigt die Draufsicht einer Gegen-Führungsschiene 42* - durch Unterbrechungen 17 verkürzt dargestellt - mit quadratischen Ausnehmungen 46* zum Übergreifen der Ausprägungen 44* der Führungsschiene 40* gemäß Figur 22 zum Montieren bzw. Herstellen der Renkverbindung zwischen den Führungsschienen 40*, 42*.

Die Renkverbindungen 43 zwischen oberer und unterer Führungsschiene 40, 42 werden mittels Durchstecken der Ausprägungen 44 durch die weiten Bereiche 48 der Ausnehmungen 46 und anschließendes axiales Verschieben der Führungsschienen 40, 42 gegeneinander hergestellt, so daß die freien Enden 45 der Ausprägungen 44 die engen Bereiche 50 der Ausnehmungen übergreifen.

Die Renkverbindung 43 zwischen nur einer einzigen Führungsschiene 40 und Messern 20, 22 wird mittels Durchstecken der Ausprägungen 44 durch die weiten Bereiche 66 der Langlöcher 65 und anschließendes axiales Verschieben der Führungsschiene 40 gegenüber den Messern 20, 22 hergestellt, so daß die freien Enden 45 der Ausprägungen 44 die engen Bereiche 67 der Langlöcher 65 übergreifen und diese um ihren Arbeitshub hin- und herverschiebbar gegen Verlieren gesichert sind.

Bei einem nicht dargestellten Ausführungsbeispiel der Erfindung ist der Messersatz ganz ohne jede Führungsschiene und nur durch eine Renkverbindung miteinander gekoppelt, indem eines der Messer mit Ausprägungen versehen ist, wie sie beipielsweise die Führungsschienen der Figuren 3 bis 5, oder 8 oder 10 bis 12 oder 14 bis 16 oder 18 bis 19 oder 22 bis 24 aufweisen und die das schlüssellochartige Langloch des anderen Messers durchgreifen, so daß die beiden Messer längsverschiebbar aneinander unverlierbar festgehalten werden. Dabei können beide Messer hin- und hergehend angetrieben sein bzw. es kann auch nur eines angetrieben und das andere feststehend angeordnet sein.

## Patentansprüche

1. Heckenschere (10) mit einem Gehäuse (12), das einen Handgriff (14) mit einer Schaltertaste (15) sowie einen Haltegriff (16) aufweist und das einen Motor (24) aufnimmt zum Antrieb eines mit einem Arbeitshub hin- und hergehenden Messers (20), das sich mit seiner Flachseite an einem Gegenmesser (22) und einer Führungsschiene, (40, 40', 40", 40"', 40"", 40*, 42) abstützt, wobei die Messer (20, 22) und die Führungsschiene (40, 40', 40", 40"', 40"", 40*, 42) von der Heckenschere (10) getragen werden, **dadurch gekennzeichnet,**
**dass** zwischen dem Messer (20) und dem Gegenmesser (22) und der Führungsschiene (40', 40", 40"', 40"", 42) mindestens eine, insbesondere ohne Hilfswerkzeug, lösbare Renkverbindungen (43', 43", 43"', 43"") angeordnet ist, wobei sie nur eine einzige, insbesondere als U-Profil (37, 38) ausgestaltete, Führungsschiene (40', 40", 40"', 40"") aufweist.

2. Heckenschere nach Anspruch 1, **dadurch gekennzeichnet, dass** die Renkverbindung (43', 43", 43"', 43"") einerseits durch eine aus der Ebene herausragende Ausprägung (44', 44", 44"', 44"") der Führungsschiene (40', 40", 40"', 40""), insbesondere lappenartig, mit einem gegenüber einem Fußbereich (45') breiteren, vorzugsweise pilzkopfartigen, freien Ende (45) und andererseits durch eine, insbesondere schlüssellochartige, Ausnehmung (65) des Messers (20, 22) gebildet wird, wobei die Ausnehmung (65) einen weiten Bereich (66) zum Durchtritt des freien Endes (45) und einen engen Bereich (67) zum unverlierbaren Umgreifen des Fußbereichs (45') der Ausprägung (44', 44", 44"', 44"") aufweist, wobei der enge Bereich (67) mindestens ebenso lang ist wie der Arbeitshub des Messers (20, 22).

3. Heckenschere nach Anspruch 2, **dadurch gekennzeichnet, dass** der enge Bereich (66) der Ausnehmung (65) schmaler als das freie Ende (45) und breiter als der Fußbereich (45') der Ausprägung (44', 44", 44"', 44"") ist.

4. Heckenschere nach Anspruch 1 bis 3, **dadurch gekennzeichnet, dass** außer der Renkverbindung (43', 43", 43"', 43"") keine weiteren Befestigungsmittel wie Nieten, Schrauben zwischen dem mindestens einen Messer (20, 22) und der Führungsschiene (40', 40", 40"', 40"") angeordnet sind.

5. Heckenschere (10) mit einem Gehäuse (12), das einen Handgriff (14) mit einer Schaltertaste (15) sowie einen Haltegriff (16) aufweist und das einen Motor (24) aufnimmt zum Antrieb eines mit einem Arbeitshub hin- und hergehenden Messers (20), das sich mit seiner Flachseite an einem Gegenmesser (22) und zwei Führungsschienen (40, 40', 40", 40''', 40"", 40*, 42) abstützt, wobei die Messer (20, 22) und die Führungsschienen (40, 40', 40'', 40''', 40"", 40*, 42) von einer Heckenschere (10) getragen werden, **dadurch gekennzeichnet, dass** zwei Führungsschienen (40, 40''', 40*, 42), insbesondere ausschließlich durch eine Renkverbindung (43, 43'''', 43*) miteinander kuppelbar sind, die ein, insbesondere schlüssellochartiges Langloch (65) des mindestens einen Messers (20, 22) durchtritt.

6. Heckenschere nach Anspruch 5 oder 2, **dadurch gekennzeichnet, dass** das Langloch (65) des Messers (20, 22) schlüssellochartig mit einem weiten und einem engen Bereich (66, 67), ausgestaltet ist.

7. Heckenschere nach Anspruch 6, **dadurch gekennzeichnet, dass** die Renkverbindung (43, 43"", 43*) einerseits durch eine aus der Ebene der Führungsschiene (40, 40"", 40*) herausragende Ausprägung (44, 44"", 44*), insbesondere lappenartig, mit einem gegenüber dem übrigen Bereich breiteren, pilzkopfartigen freien Ende (45) und andererseits durch eine schlüssellochartige Ausnehmung (46) der anderen Führungsschiene (42) gebildet wird, wobei die Ausnehmung (46) einen weiten Bereich (48) zum Durchtritt des freien Endes (45) der Ausprägung (44, 44"", 44*) und einen engen Bereich (50) zum unverlierbaren Umgreifen des Fußbereichs (45') der Ausprägung (44, 44"", 44*) aufweist.

8. Heckenschere nach einem der Ansprüche 2 oder 7, **dadurch gekennzeichnet, dass** das freie Ende (45) der Ausprägung (44, 44") ein ebenes, insbesondere rechtwinklig und parallel zur Führungsschiene (40, 40") ausgerichtetes, Kreuz (52) bildet, das mit der Führungsschiene (40, 40") über i.w. längsparallel zu dieser verlaufend aus dieser heraustretende Lappen (45', 45") verbunden ist.

9. Heckenschere nach einem der Ansprüche 2 oder 7, **dadurch gekennzeichnet, dass** die Ausprägung (44"') ein quer zur Führungsschiene (40"') längs aus deren Flachseite herausragender T-profilförmiger Lappen (60), insbesondere mit rechtwinklig abgebogenem freien Ende (45"') ist.

10. Heckenschere nach einem der Ansprüche 2 oder 7, **dadurch gekennzeichnet, dass** die Ausprägung (44') ein rechtwinklig aus der Führungsschiene (40') tretendes, achsparallel zu dieser verlaufendes U-Profil (56) ist, dessen Schenkelenden rechtwinklig nach außen abgebogen sind, wobei sich die Messer (20, 22) und/oder die Gegen-Führungsschiene (42) an den abgebogenen Bereichen der Schenkel unverlierbar abstützen.

11. Heckenschere nach einem der vorhergehenden Ansprüche, **dadurch gekennzeichnet, dass** mehrere Renkverbindungen (43) im Abstand von etwa 100 mm aufeinanderfolgend angeordnet sind.

## Claims

1. Hedge trimmer (10) having a housing (12) which has a handle (14) with a switch button (15) and also a hand grip (16) and which accommodates a motor (24) for driving a blade (20) which reciprocates with a working stroke and is supported with its flat side on a counter-blade (22) and a guide rail (40, 40', 40'', 40''', 40'''', 40*, 42), the blades (20, 22) and the guide rail (40, 40', 40'', 40''', 40'''', 40*, 42) being carried by the hedge trimmer (10), **characterized in that** at least one bayonet connection (43', 43'', 43''', 43"") which is releasable, in particular without an auxiliary tool, is arranged between the blade (20) and the counter-blade (22) and the guide rail (40', 40'', 40''', 40'''', 42), the hedge trimmer having only a single guide rail (40', 40'', 40''', 40"") designed in particular as a U-profile (37, 38).

2. Hedge trimmer according to Claim 1, **characterized in that** the bayonet connection (43', 43'', 43''', 43'''') is formed, on the one hand, by an embossment (44', 44'', 44''', 44''''), projecting from the plane, of the guide rail (40', 40'', 40''', 40''''), in particular in a tab-like manner with a preferably mushroom-head-like free end (45) which is wider than a base region (45'), and, on the other hand, by an, in particular keyhole-like, aperture (65) of the blade (20, 22), the aperture (65) having a wide region (66) for the passage of the free end (45) and a narrow region (67) for captively enclosing the base region (45') of the embossment (44', 44'', 44''', 44''''), the narrow region (67) being at least just as long as the working stroke of the blade (20, 22).

3. Hedge trimmer according to Claim 2, **characterized in that** the narrow region (66) of the recess (65) is narrower than the free end (45) and wider than the base region (45') of the embossment (44', 44'', 44''', 44'''').

4. Hedge trimmer according to Claims 1 to 3, **characterized in that**, apart from the bayonet connection (43', 43", 43''', 43''''), no other fastening means such as rivets or screws are arranged between the at least one blade (20, 22) and the guide rail (40', 40'', 40"', 40'''').

5. Hedge trimmer (10) having a housing (12) which has a handle (14) with a switch button (15) and also a hand grip (16) and which accommodates a motor (24) for driving a blade (20) which reciprocates with a working stroke and is supported with its flat side on a counter-blade (22) and two guide rails (40, 40', 40'', 40''', 40'''', 40*, 42), the blades (20, 22) and the guide rails (40, 40', 40'', 40"', 40'''', 40*, 42) being carried by a hedge trimmer (10), **characterized in that** two guide rails (40, 40''', 40*, 42) can be coupled to one another, in particular solely by a bayonet connection (43, 43'''', 43*), which passes through an, in particular keyhole-like, elongated hole (65) of the at least one blade (20, 22).

6. Hedge trimmer according to Claim 5 or 2,
**characterized in that** the elongated hole (65) of the blade (20, 22) is of keyhole-like configuration having a wide and a narrow region (66, 67).

7. Hedge trimmer according to Claim 6, **characterized in that** the bayonet connection (43, 43'''', 43*) is formed, on the one hand, by an embossment (44, 44'''', 44*) projecting from the plane of the guide rail (40, 40'''', 44*), in particular in a tab-like manner with a mushroom-head-like free end (45) which is wider than the remaining region, and, on the other hand, by a keyhole-like aperture (46) of the other guide rail (42), the aperture (46) having a wide region (48) for the passage of the free end (45) of the embossment (44, 44'''', 44*) and a narrow region (50) for captively enclosing the base region (45') of the embossment (44, 44'''', 44*).

8. Hedge trimmer according to either of Claims 2 and 7, **characterized in that** the free end (45) of the embossment (44, 44'') forms a plane cross (52) which is oriented in particular at right angles and parallel to the guide rail (40, 40'') and is connected to the guide rail (40, 40'') via tabs (45', 45'') emerging from the latter in such a way as to run essentially longitudinally and parallel to it.

9. Hedge trimmer according to either of Claims 2 and 7, **characterized in that** the embossment (44''') is a T-profile-shaped tab (60) which projects longitudinally from the flat side of the guide rail (40''') transversely to the latter and has, in particular, a free end (45''') bent at right angles.

10. Hedge trimmer according to either of Claims 2 and 7, **characterized in that** the embossment (44') is a U-profile (56) which emerges at right angles from the guide rail (40') and runs in an axially parallel manner to the latter, and the leg ends of which are bent outwards at right angles, the blades (20, 22) and/or the counter-guide rail (42) being captively supported on the bent regions of the legs.

11. Hedge trimmer according to one of the preceding claims, **characterized in that** a plurality of bayonet connections (43) are arranged to follow one another at a distance apart of about 100 mm.

## Revendications

1. Taille-haie (10) comportant un boîtier (12) muni d'une poignée (14) avec une gâchette de mise en marche (15) ainsi qu'une poignée de maintien (16) et recevant un moteur (24) pour l'entraînement d'un couteau (20) effectuant une course de travail suivant un mouvement de va-et-vient, ce couteau s'appuyant par un grand côté contre un contre-couteau (22) et contre un rail de guidage (40, 40', 40", 40"', 40"", 40*, 42), les couteaux (20, 22) et les rails de guidage (40, 40', 40", 40'", 40"", 40*, 42), étant portés par le taille-haie (10),
**caractérisé par**
au moins une liaison à baïonnettes (43', 43", 43"', 43""), démontable sans outil, entre le couteau (20) et le contre-couteau (22) et le rail de guidage (40', 40", 40"', 40"", 42).
ces liaisons à baïonnettes ne comportant qu'un unique rail de guidage (40', 40", 40"', 40""), réalisé notamment sous la forme d'un profil en U (37, 38).

2. Taille-haie selon la revendication 1,
**caractérisé en ce que**
la liaison à baïonnettes (43', 43", 43"', 43"") comprend d'une part une déformation (44', 44", 44"', 44"") en saillie du plan du rail de guidage (40', 40", 40"', 40""), notamment en forme de patte avec une extrémité libre (45) plus large que sa base (45') de préférence en forme de champignon et d'autre part, une découpe (65) du couteau (20, 22) réalisée notamment sous la forme d'un trou de serrure, la découpe (65) ayant une zone élargie (66) pour le passage de l'extrémité libre (45) et une zone étroite (67) pour chevaucher de manière imperdable la base (45') de la déformation (44', 44", 44"', 44""), la zone étroite (67) étant au moins aussi longue que la course de travail du couteau (20, 22).

3. Taille-haie selon la revendication 2,
**caractérisé en ce que**
la zone étroite (66) de la découpe (65) est plus étroite que l'extrémité libre (45) et plus large que la base (45') de la déformation (44', 44", 44"', 44"").

4. Taille-haie selon l'une quelconque des revendications 1 à 3,
**caractérisé en ce qu'**
en dehors de la liaison à baïonnettes (43', 43", 43"', 43""), il n'y a pas d'autres moyens de fixation tels que des rivets ou vis entre au moins un couteau (20, 22) et le rail de guidage (40', 40", 40'", 40"").

5. Taille-haie (10) comportant un boîtier (12) muni d'une poignéc (14) avec gâchette de mise en marche (15) et une poignée (16), logeant le moteur (24) pour entraîner un couteau (20) effectuant un mouvement de va-et-vient, ce couteau s'appuyant par son côté large contre un contre-couteau (22) et contre deux rails de guidage (40, 40', 40", 40'", 40"", 40* , 42), les couteaux (20, 22) et les rails de guidage étant portés par le taille-haie (10),
**caractérisé en ce que**
les deux rails de guidage (40, 40"', 40*, 42) sont couplés l'un à l'autre exclusivement par une liaison à baïonnettes (43, 43"", 43*) qui traverse en particulier un trou oblong (65) en forme de trou de serrure d'au moins un couteau (20, 22).

6. Taille-haie selon l'une quelconque des revendications 2 ou 5,
**caractérisé en ce que**
le trou oblong (65) du couteau (20, 22) a une forme de trou de serrure avec une zone large et une zone étroit (66, 67).

7. Taille-haie selon la revendication 6,
**caractérisé en ce que**
la liaison à baïonnette (43, 43"", 43*) comprend d'une part une déformation (44, 44"", 44*) dégagée du plan du rail dc guidage (40, 40"", 40*), cette déformation étant notamment en forme de patte avec une extrémité libre (45) en forme de champignon, plus large que la partie restante et d'autre part une découpe (46) en forme de trou de serrure pour l'autre rail de guidage (42), la découpe (46) ayant une zone large (48) pour le passage de l'extrémité libre (45) de la déformation (44, 44"", 44*) et une zone étroite (50) pour entourer dc manière imperdable la base (45') de la déformation (44, 44"", 44*).

8. Taille-haie selon l'une quelconque des revendications 2 ou 7,
**caractérisé en ce que**
l'extrémité libre (45) de la déformation (44, 44") forme une croix (52) plane, notamment à l'équerre et a lignée parallèlement au rail de guidage (40, 40"), cette croix étant reliée au rail de guidage (40, 40") par des pattes (45', 45") qui sont essentiellement parallèles à l'axe longitudinal du rail de guidage et viennent en saillie de celui-ci.

9. Taille-haie selon l'une quelconque des revendications 2 ou 7,
**caractérisé en ce que**
la déformation (44'") est une patte (60) à profil en forme de T, dégagée transversalement au rail de guidage (40"'), le long de son grand côté. avec une extrémité libre (45'") notamment recourbée à l'équerre.

10. Taille-haie selon l'une quelconque des revendications 2 ou 7,
**caractérisé en ce que**
la déformation (44') est un profil en U (56), d'axe parallèle au rail de guidage (40') et sortant perpendiculairement de celui-ci, les extrémités des branches étant recourbées à l'équerre vers l'extérieur, et les couteaux (20, 22) et/ou le contre-rail de guidage (42) s'appuient de manière imperdable contre les zones recourbées des branches.

11. Taille-haie selon l'une quelconque des revendications précédentes,
**caractérisé par**
plusieurs liaisons à baïonnettes (43) qui se suivent à un intervalle d'environ 100 mm.
